# EUROPEAN PATENT APPLICATION

(11) **EP 1 267 068 A2**
(43) Date of publication of application: **18.12.2002**
(21) Application number: 02012342.8
(22) Date of filing: 05.06.2002
(51) Int. Cl.: F02M 37/22

(54) **Diesel fuel filter with water separation means**

(30) Priority: 14.06.2001 IT MI20011255
(71) Applicant: Sogefi Filtration S.p.a., 46100 Mantova (IT)
(72) Inventor: Baracchi, Paolo, 10155 Torino (IT); Crovetti, Claudio, 46100 Mantova (IT); Tallano, Sergio, 46047 Porto Mantovano (Mantova) (IT)
(74) Representative: Modiano, Guido, Dr.-Ing.

(57) **Abstract**

A Diesel fuel filter comprising a substantially cylindrical outer enclosure (1a) that has a bottom (1b) and a cover (2) and is provided with a filtering mass (3) in the form of rolled-up paper contained within a portion of space that is delimited at the side walls by the outer enclosure (1a) and by a sleeve (4) coaxial to the enclosure (1a) and is open in an upper region onto a chamber (5) that lies below the cover (2) at the peripheral region of the sleeve (4) and is open, in a lower region, onto a water collection chamber (6). The filtering mass (3) is crossed by the fuel that enters the filter (1) through connectors (7) provided in the peripheral region of the cover (2), passes through the mass (3) with a direction that is substantially parallel to the axis of the filter, reaching the lower chamber (6), and rises through the sleeve (4), exiting from the filter through an output connector (8) provided at the center of the cover (2). The filter further comprises separation means to separate the water that is contained within the fuel, the separation means being provided in the form of a basket (10) with a side wall (10a) and a bottom (10b), which is made of micromesh at least at the side wall (10a) and lies within the sleeve (4).

## Description

The present invention relates to a Diesel fuel filter.

It is known that filters are inserted on the circuit that feeds the fuel of Diesel engines, commonly known as Diesel fuel, and comprise a substantially cylindrical outer enclosure with a bottom and a cover and have a filtering mass in the form of rolled-up paper contained within a portion of space that is delimited by said outer enclosure at the side walls and by a sleeve that is coaxial to the enclosure and is in contact, in an upper region, with the cover and is spaced from the bottom in a lower region.

Such portion of space for containing the filtering mass is open, in an upper region, onto a chamber that lies below the cover at the peripheral region of the sleeve, and is open, in a lower region, onto a water collection chamber proximate to the bottom of the enclosure, and therefore the filtering mass is designed to be crossed, in a direction that is substantially parallel to the axis of the filter, by the fuel, which enters the filter through connectors provided in the peripheral region of the cover, passes through the filtering mass, reaching the lower chamber, and then rises through the sleeve and exits at an output connector located at the center of the cover.

The aim of the present invention is to provide a Diesel fuel filter of the described type that has means effective to separate the water contained in the fuel, which is not retained sufficiently by the described filtering mass and must not reach the motor because it could damage it.

This aim is achieved by a Diesel fuel filter according to the invention, which comprises a substantially cylindrical outer enclosure that has a bottom and a cover and is provided with a filtering mass in the form of rolled-up paper contained within a portion of space that is delimited at the side walls by said outer enclosure and by a sleeve that is coaxial to the enclosure, is in contact in an upper region with the cover and in a lower region is spaced from the bottom, said sleeve being open in an upper region onto a chamber that lies below the cover at the peripheral region of the sleeve and being open, in a lower region, onto a water collection chamber, said filtering mass being arranged to as to be crossed by the fuel that enters the filter through connectors provided in the peripheral region of the cover, passes through the mass with a direction that is substantially parallel to the axis of the filter, reaching the lower chamber, rises through the sleeve and exits from the filter through an output connector provided at the center of the cover, characterized in that it comprises separation means suitable to separate the water that is contained within the fuel, said separation means being provided in the form of a basket with a side wall and a bottom, which is made of micromesh at least at the side wall and lies within the sleeve.

Further characteristics and advantages of the present invention will become better apparent from the following detailed description of some preferred but not exclusive embodiments thereof, illustrated only by way of non-limitative example in the accompanying drawings, wherein:
Figure 1 is a sectional view, taken along a longitudinal plane, of a filter according to a first embodiment of the invention;
Figure 2 is a sectional view, taken along a longitudinal plane, of a filter according to a second embodiment of the invention;
Figure 3 is a sectional view, taken along a longitudinal plane, of a filter according to a third embodiment of the invention;
Figure 4 is a sectional view, taken along a longitudinal plane, of a filter according to a fourth embodiment of the invention.

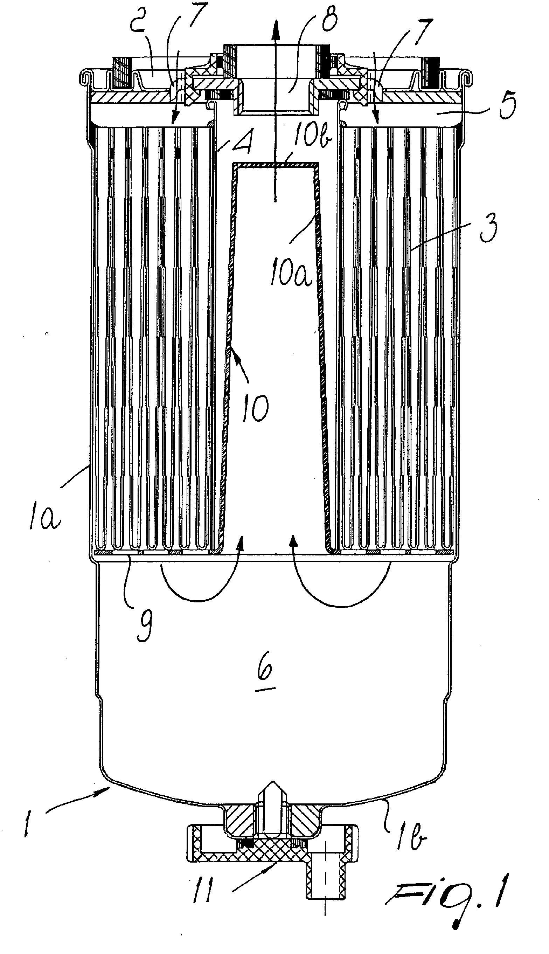

With reference to Figure 1, the reference numeral 1 generally designates the outer enclosure of the filter, which has a side wall 1a and a bottom 1b and is closed in an upper region by a cover 2.

Furthermore, the reference numeral 3 designates the filtering mass, which is provided in the form of rolled-up paper and is contained within a portion of space that is delimited by the side wall 1a of the outer enclosure and by a sleeve 4, which is coaxial to the enclosure, and is open onto an upper chamber 5, which lies below the cover 2 at the peripheral region of the sleeve, and onto a lower chamber 6 proximate to the bottom 1b of the enclosure.

The Diesel fuel, which flows as indicated by the arrows shown in the figure, enters the filter through connectors such as 7, which are provided in the cover 2 at peripheral regions, enters the chamber 5, and from there reaches the filtering mass 3, crossing it in a direction that is substantially parallel to the axis of the filter, and exits from it at the chamber 6, from where it rises in the sleeve 4 and exits from the filter through the output connector 8 provided at the center of the cover.

A perforated disk 9 is provided at the base of the filtering mass 3 in order to support said mass.

All this occurs in a known manner.

A main characteristic of the invention is the presence of means suitable to separate the water that is still present in the fuel stream that exits from the filtering mass 3; said means form a basket 10, with a side wall 10a and a bottom 10b, which is made of micromesh and comprised within the sleeve 4.

The water droplets which are retained by the micromesh basket 10 and separate from the fuel stream fall onto the bottom of the chamber 6, and the water that accumulates is removed periodically by means of the device 11.

It is specified that the micromesh for forming the basket 10 can be selected from a very wide commercially available range.

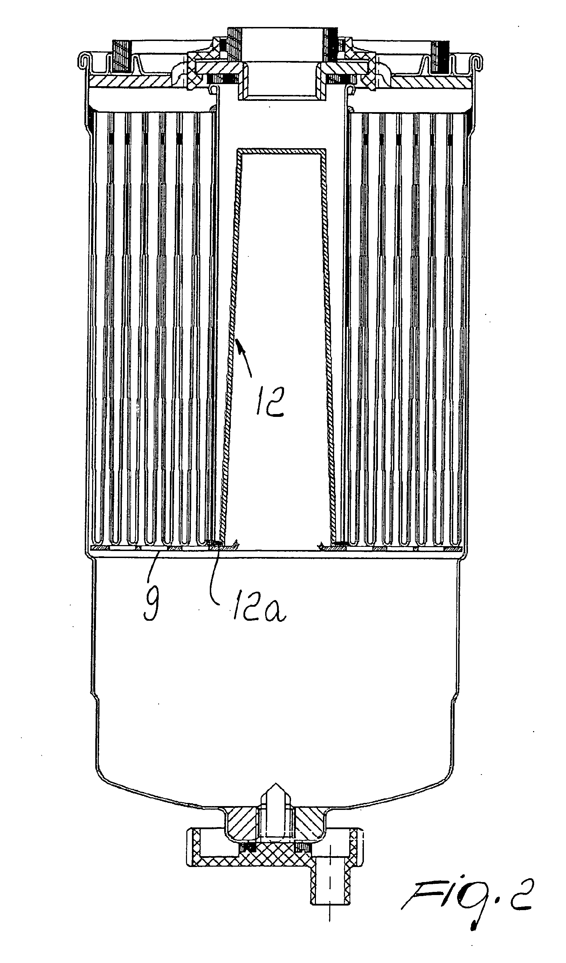

In the described embodiment of the invention, the basket 10 protrudes from the disk 9 that is provided at the base of the filtering mass 3 and is formed monolithically therewith, for example in a single production process; the only difference of the micromesh basket 12 shown in Figure 2 with respect to the basket 10 of Figure 1 is that it rests on the disk 9 in 12a, at the lower end of the side wall.

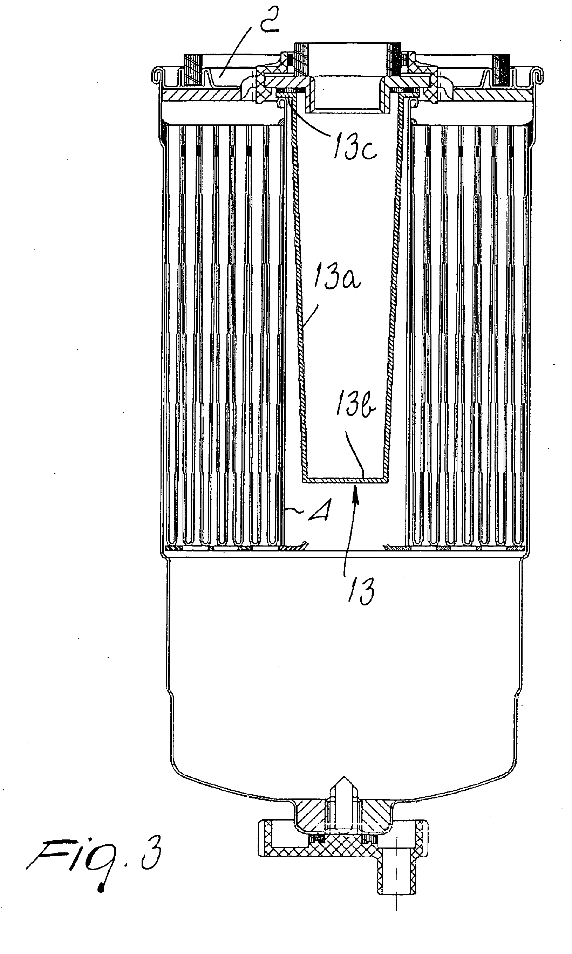

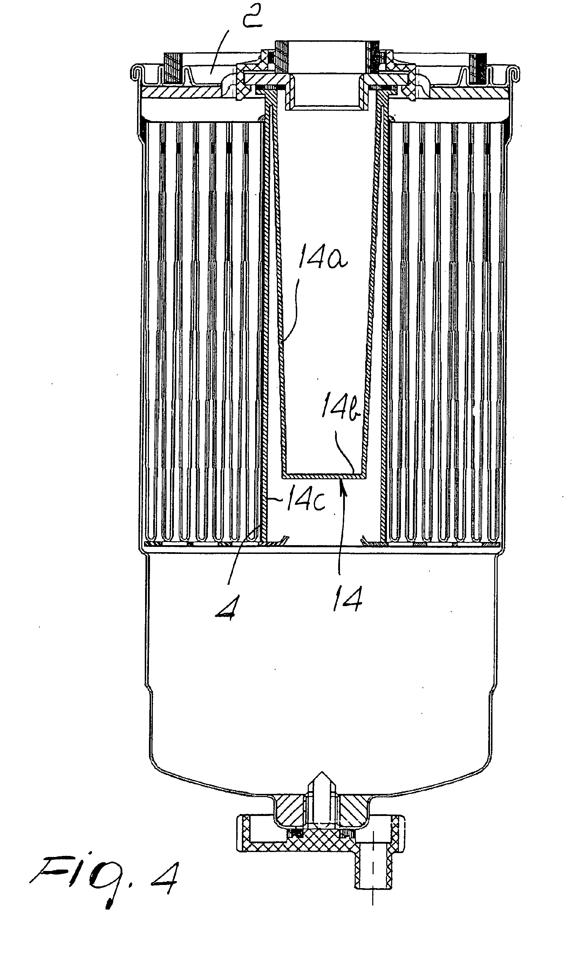

In the baskets made of micromesh 13 and 14 comprised within the embodiments shown in Figures 3 and 4, the end 13c of the side wall, designated by the reference numerals 13a and 14a respectively, is located proximate to the cover 2 of the filter, with the bottom, designated by the reference numerals 13b and 14b respectively, located proximate to the lower end of the sleeve; while the folded end 13c of the side wall 13a is locked and interposed between the upper end of the sleeve 4 and the cover 2 and the side wall 14a of the sleeve 14 has an extension 14c formed monolithically with the sleeve 4.

The side wall of the basket can be provided, in the various embodiments, either conical or cylindrical. The bottom can be either made of micromesh or solid.

The described invention is susceptible of numerous other modifications and variations, all of which are within the scope of the appended claims; thus, the wall of the basket can be cylindrical instead of conical and the bottom can be solid.

The disclosures in Italian Patent Application No. MI2001A001255 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A Diesel fuel filter comprising a substantially cylindrical outer enclosure (1a) that has a bottom (1b) and a cover (2), and is provided with a filtering mass (3) in the form of rolled-up paper contained within a portion of space that is delimited at the side walls by said outer enclosure (1a) and by a sleeve (4) that is coaxial to the enclosure (1a), is in contact in an upper region with the cover (2) and in a lower region is spaced from the bottom (1b), said sleeve (4) being open in an upper region onto a chamber (5) that lies below the cover (2) at the peripheral region of the sleeve (4) and being open, in a lower region, onto a water collection chamber (6), said filtering mass (3) being arranged as to be crossed by the fuel that enters the filter (1) through connectors (7) provided in the peripheral region of the cover (2), passes through said mass (3) with a direction that is substantially parallel to the axis of the filter (1), reaching the lower chamber (6), rises through the sleeve (4) and exits from the filter (1) through an output connector provided at the center of the cover (2), **characterized in that** it comprises separation means (10, 12, 13, 14) suitable to separate the water that is contained within the fuel, said separation means being provided in the form of a basket (10, 12, 13, 14) with a side wall (10a, 13a, 14a) and a bottom (10b, 13b, 14b), which is made of micromesh at least at the side wall (10a, 13a, 14a) and lies within said sleeve (4).

2. The filter according to claim 1, **characterized in that** the side wall (10a, 13a, 14a) of the basket (10, 12) is conical.

3. The filter according to claim 1, **characterized in that** the side wall of the basket is cylindrical.

4. The filter according to one or more of the preceding claims, **characterized in that** the side wall (10a, 13a, 14a) and the bottom (10b, 13b, 14b) of the basket (10, 13, 14) are made of micromesh.

5. The filter according to one or more of the preceding claims, **characterized in that** the basket (10, 12, 13, 14) has a side wall (10a, 13a, 14a) made of micromesh and a solid bottom (10b, 13b, 14b).

6. The filter according to one or more of the preceding claims, **characterized in that** the basket (10) is an extension of a perforated disk (9) for supporting the filtering mass (3), which is provided at the lower end of the sleeve (4) and has a bottom (10b) located proximate to the upper end of said sleeve (4).

7. The filter according to one or more of the preceding claims, **characterized in that** the basket (10) is an extension of a perforated disk (9) for supporting the filtering mass (3), which is provided at the lower end of the sleeve (4) and is formed monolithically therewith.

8. The filter according to one or more of the preceding claims, **characterized in that** the basket (12) is an extension of a perforated disk (9) for supporting the filtering mass (3) that is present at the lower end of the sleeve (4) and rests thereon at the lower end (12a) of the side wall.

9. The filter according to one or more of the preceding claims, **characterized in that** the end of the side wall (13a, 14a) of the basket (13, 14) is arranged proximate to the filter cover (2) and the bottom (13b, 14b) of said basket (13, 14) is located proximate to the lower end of the sleeve (4).

10. The filter according to one or more of the preceding claims, **characterized in that** the end (13c) of the side wall (13a) of the basket (13) is arranged proximate to the filter cover (2) and is locked between the upper end of the sleeve (4) and said cover (2).

11. The filter according to one or more of the preceding claims, **characterized in that** the end of the side wall (14a) of the basket (14) is arranged proximate to the filter cover (2) and is formed monolithically with the sleeve (4).
